# EUROPÄISCHE PATENTSCHRIFT

(11) **EP 3 750 155 B1**
(45) Veröffentlichungstag und Bekanntmachung des Hinweises auf die Patenterteilung: **25.11.2026**
(21) Anmeldenummer: 19702191.8
(22) Anmeldetag: 15.01.2019
(51) Int. Cl.: G10L 15/22, G10L 21/043, G10L 21/003, G06F 3/16, G08C 17/00, H04K 1/00, H04L 12/28, H04L 9/40, H04M 3/42, H04W 12/02, H04K 1/04, H04K 1/06

(54) **VERFAHREN UND SYSTEM ZUM BEREITSTELLEN EINES SPRACHBASIERTEN DIENSTES, INSBESONDERE FÜR DIE ANSTEUERUNG VON RAUMBEDIENELEMENTEN IN GEBÄUDEN**
METHOD AND SYSTEM FOR PROVIDING A SPEECH-BASED SERVICE, IN PARTICULAR FOR ACTIVATING ROOM OPERATING ELEMENTS IN BUILDINGS
PROCÉDÉ ET SYSTÈME PERMETTANT DE FOURNIR UN SERVICE VOCAL, NOTAMMENT POUR COMMANDER DES ÉLÉMENTS DE COMMANDE DE SALLE DANS DES BÂTIMENTS

(30) Priorität: 09.02.2018 DE 102018202018
(43) Veröffentlichungstag der Anmeldung: 16.12.2020
(73) Patentinhaber: Siemens Schweiz AG, 8047 Zürich (CH)
(72) Erfinder: ROHRBACHER, Kai, 6331 Hünenberg (CH); ZECHLIN, Oliver, 6300 Zug (CH)
(74) Vertreter: Siemens Patent Attorneys
(86) Internationale Anmeldenummer: PCT/EP2019/050945
(87) Internationale Veröffentlichungsnummer: WO 2019/154598

(56) Entgegenhaltungen:
- EP-A1- 3 496 090
- US-A1- 2013 325 452
- US-A1- 2014 278 366
- US-A1- 2018 005 626
- SHUFEI HE: "Speaker De-identification for Privacy Protection", 1 September 2016 (2016-09-01), London, England, XP055499092, Retrieved from the Internet <URL:http://ctoresearch.irdeto.com/materials/shufei_1st_year_report.pdf> [retrieved on 20180810]
- NICHOLAS CARLINI ET AL: "Hidden Voice Commands", THIS PAPER IS INCLUDED IN THE PROCEEDINGS OF THE 25TH USENIX SECURITY SYMPOSIUM AUGUST 10-12, vol. 8275, 10 August 2016 (2016-08-10), Berlin, Heidelberg, pages 513 - 530, XP055460530, ISBN: 978-3-642-45064-8, DOI: 10.1007/978-3-642-45065-5

## Beschreibung

Die Erfindung betrifft ein Verfahren und ein System zum Bereitstellen eines sprachbasierten Dienstes, insbesondere für die Ansteuerung von Raumbedienelementen in Gebäuden. Weiterhin betrifft die Erfindung ein computerlesbares Speichermedium und ein Computerprogrammprodukt, das Anweisungen speichert, die wenn sie von einem Computer ausgeführt werden, den Computer veranlassen, ein Verfahren zum Bereitstellen eines sprachbasierten Dienstes, insbesondere für die Ansteuerung von Raumbedienelementen in Gebäuden, durchzuführen.

Intelligente Audiogeräte, wie z.B. Amazon Echo oder Google Home, ermöglichen einem Benutzer, im Zusammenwirken mit entsprechenden Virtuellen Assistenten bzw. Sprachassistenten (wie. z.B. Alexa von Amazon oder Siri von Apple), eine Steuerung von damit verbundenen Geräten, durch Sprachbefehle bzw. Sprachkommandos. Ein Sprachbefehl bzw. ein Sprachkommando oder eine Folge davon wird analysiert, ausgewertet, und eine entsprechende Reaktion am entsprechenden Gerät bewirkt. Z.B. "Schalte das Licht im Wohnzimmer ein".

Die intelligenten Audiogeräte sind dabei Geräte, die eine "Artificial Intelligence" engine (Künstliche Intelligenz (KI)-Engine) Software verwenden, die das Verhalten, Gewohnheiten, und Präferenzen der Benutzer lernt, und so auch individuell passende Vorschläge, Lösungen oder Aktionen für einen Benutzer anbieten kann. Dies erfordert aber die Preisgabe von individuellen und personenbezogenen Daten durch den Benutzer, welche typischerweise ausserhalb des Kontroll- und Einflussbereichs des Benutzers verarbeitet, analysiert und personenbezogen gespeichert werden.

Aus Gründen des Datenschutzes ist der Einsatz dieser intelligenten Audiogeräte somit nur im Privathaushalt bzw. nur im Privatleben möglich, da sich die Privatperson selber dezidiert für den Einsatz dieser Art Sprachdienste innerhalb ihrer Räumlichkeiten entschieden hat. In Nicht-Privathaushalten, wie z.B. Unternehmen, ist die Verwendung dieser Art Sprachsteuerung dagegen äusserst kritisch, da in der Regel eine Vielzahl von Personen den Dienst nutzen, welche keine formale Einwilligung für eine personenbezogene Nutzung ihrer Daten gegeben haben (noch teilweise geben würden).

US 2014/0278366 A1 offenbart Systeme und Verfahren zur Extraktion von Audioinformationen, z.B. einer Textbeschreibung von Sprache, aus einer Sprachaufzeichnung unter Beibehaltung der Anonymität des Sprechers. In bestimmten Ausführungsformen kann ein Dritter verschiedene Aspekte der Anonymisierung und Sprachverarbeitung durchführen. Bestimmte Ausführungsformen ermöglichen die Anonymisierung in Übereinstimmung mit verschiedenen gesetzlichen Anforderungen, auch wenn Dritte beteiligt sind. Das Verfahren umfasst das Empfangen einer Rohwellenform, die Sprachdaten eines Benutzers enthält, das Bereitstellen der Rohwellenform an ein Drittanbieter-Verarbeitungssystem, das Anweisen des Drittanbieter-Verarbeitungssystems, eine Operation an der Wellenform durchzuführen, wobei die Operation die Identifizierung des Benutzers aus der Wellenform erschwert, und das Empfangen einer textuellen Darstellung der Sprache vom Drittsystem.

Es ist daher die Aufgabe der vorliegenden Erfindung ein Verfahren und ein System bereitzustellen, welches die Verwendung von sprachbasierten Diensten auch in Nicht-Privathaushalten, wie z.B. Unternehmen, unter Berücksichtigung des Datenschutzes ermöglicht.

Die Aufgabe wird gelöst durch ein Verfahren zum Bereitstellen eines sprachbasierten Dienstes, insbesondere für die Ansteuerung von Gebäudeinfrastrukturtechnik, das Verfahren umfassend:
Empfangen von Sprachbefehlen durch ein Audiogerät, wobei das Audiogerät eingerichtet ist, die empfangenen Sprachbefehle zu analysieren, in entsprechende Bedienkommandos zur Ansteuerung von Geräten (z.B. Feldgeräte) und/oder Programmen in einem Gebäude umzuwandeln und an entsprechenden Raumbedienelemente oder direkt an die jeweilige Gebäudeinfrastrukturtechnik weiterzuleiten;
wobei vor der Auswertung der Sprachbefehle durch einen entsprechenden Spracherkennungsdienst (z.B. Assistenzdienst) die Identität des Senders der Sprachbefehle durch einen separaten und vertrauenswürdigen Anonymisierungsdienst anonymisiert wird. Gemäß der Erfindung umfasst das Verfahren außerdem die weiteren Merkmale von Anspruch 1.

Die Anonymisierung erlaubt u.a. die Nutzung von Assistenzdiensten unter Beibehaltung des Datenschutzes. Durch die Anonymisierung wird die Identität des eigentlich Anfragenden verschleiert, ohne aber die eigentliche Anlagensteuerung durch Sprache zu beeinträchtigen.

Die Anonymisierung der empfangenen Sprachbefehle kann durch das Audiogerät selbst erfolgen oder durch einen mit dem Audiogerät verbundenen vertrauenswürdigen (trustworthy) Server (z.B. ein lokaler Server). Die anonymisierten Sprachbefehle können von einem externen (eventuell auch nicht vertrauenswürdigen, non-trustworthy) Server übernommmen, analysiert und als entsprechende Bedienkommandos zur Ansteuerung von Geräten (z.B. Feldgeräte) oder Programmen (z.B. Programme einer Gebäudemanagementstation oder eines Raumbedienelementes) weitergeleitet werden.

Eine erste vorteilhafte Ausgestaltung der Erfindung liegt darin, dass die Anonymisierung durch eine randomisierte Sprachverfremdung erfolgt. Dies kann z.B. durch einen Verzerrer erfolgen, der eine Deformation des ursprünglichen Sprachkommandos bewirkt, welche eine personenbezogene Zuordnung verhindert (z.B. Veränderung der Stimmlage und/oder Sprachgeschwindigkeit). Die randomisierte Sprachverfremdung kann dabei im Audiogerät, durch entsprechende Hardware- oder Softwarekomponenten, erfolgen. Im Prinzip kann die randomisierte Sprachverfremdung aber auch an jeder anderen vertrauenswürdigen Stelle erfolgen, bevor der entsprechende Dienstleister bzw. der virtuelle Assistent (d.h. der entsprechende Dienst, der die digitale Sprachanalyse bereitstellt) aufgerufen wird. Die randomisierte Sprachverfremdung bewirkt eine Erhöhung der Entropie des vom Benutzer abgegeben Sprachkommandos.

Die Anonymisierung erfolgt derart, dass eine Rückverfolgbarkeit zwischen dem Sender (Benutzer) und dem Anonymisierungsdienst gegeben ist, aber nicht zwischen dem Sender und dem Audiogerät. Das Audiogerät und der entsprechende Anbieter des virtuellen Assistenten können somit ein empfangenes Sprachkommando nicht auf den Absender (Benutzer) rückverfolgen und diesen auch nicht identifizieren. Der Absender (Benutzer) eines Sprachkommandos ist somit intransparent für das Audiogerät und den virtuellen Assistenten. Der Provider des virtuellen Assistenten kann somit keine personenbezogenen Daten des Benutzers auswerten. Eine Rückverfolgbarkeit ist nur zwischen dem Sender (Benutzer) und dem Anonymisierungsdienst gegeben. Nur der dem Audiogerät bzw. dem virtuellen Assistenten vorgeschaltete Anonymisierungsdienst ist in der Lage bzw. eingerichtet personenbezogene Daten des Benutzers auszuwerten oder benutzerbezogene sprachliche Rückmeldungen (z.B. Feedback) auf ein jeweiliges Sprachkommando des Benutzers zu geben. In dieser Ausgestaltung der vorliegenden Erfindung wird die Rückmeldung bzw. das Feedback für einen Benutzer vom Anonymisierungsdienst generiert.

Basierend auf der Analyse der empfangenen Sprachbefehle generiert das Audiogerät ein Feedback, welches vom Anonymisierungsdienst einem dedizierten Sender zugeordnet wird. In dieser Ausgestaltung der vorliegenden Erfindung wird die Rückmeldung bzw. das Feedback auf einen Sprachbefehl zwar vom Audiogerät bzw. vom virtuellen Assistenten generiert, die Zuordnung des erkannten Sprachbefehls zu seinem wirklichen Sprecher ist aber maximal (und auch nur wenn explizit gewünscht) dem Audiogerät bzw. dem vertrauenswürdigen Anonymisierungsdienst möglich, nicht aber dem (nicht vertrauenswürdigen) virtuellen Assistenten / Sprachdienstleister.

Die Aufgabe wird weiterhin gelöst durch ein System zum Bereitstellen eines sprachbasierten Dienstes, insbesondere für die Ansteuerung von Raumbedienelementen (RBE) in Gebäuden, das System umfasst:
einen vertrauenswürdigen Anonymisierungsdienst, der eingerichtet ist, Sprachbefehle eines Senders zu empfangen und so umzuwandeln, dass die Identität des Senders der Sprachbefehle anonymisiert ist, wobei der Anonymisierungsdienst weiter eingerichtet ist, die anonymisierten Sprachbefehle für ein Audiogerät, insbesondere ein nicht vertrauenswürdiges Audiogerät, bereitzustellen;
ein Audiogerät, insbesondere ein nicht vertrauenswürdiges Audiogerät, zum Empfangen der anonymisierten Sprachbefehle, wobei das Audiogerät eingerichtet ist, die empfangenen Sprachbefehle zu analysieren, in entsprechende Bedienkommandos zur Ansteuerung von Geräten (z.B. HVAC- oder Feldgeräte) und/oder Programmen (z.B. Programme für eine Gebäudemanagementstation) in einem Gebäude umzuwandeln und an diese weiterzuleiten. Gemäß der Erfindung umfasst das System außerdem die weiteren Merkmale von Anspruch 3.

Der Anonymisierungsdienst kann z.B. im Audiogerät realisiert werden (wenn es als vertrauenswürdig eingestuft werden kann) oder auf einem dem entsprechenden virtuellen Assistenten vorgelagerten vertrauenswürdigem Proxy (z.B. im Gebäude selbst oder bei einem vertrauenswürdigen Dienstleister). Der Anonymisierungsdienst kann eine empfangene Sprachnachricht (oder einen Sprachbefehl) z.B. durch eine Sprechverzerrung in eine anonymisierte Sprachnachricht umwandeln. Es ist aber auch möglich, dass eine empfangene Sprachnachricht vom Anonymisierungsdienst in einen (mit Vorteil internen) Text umgewandelt wird. Dieser Text wird dann durch einen Sprachgenerator des Anonymisierungsdienstes für den Assistenzdienst (z.B. Amazon Alexa) ausgegeben. Durch die Anonymisierung wird sichergestellt, dass auf die Person, die die ursprüngliche Sprachnachricht (oder den Sprachbefehl) abgesetzt hat, nicht mehr rückgeschlossen werden kann.

Eine weitere vorteilhafte Ausgestaltung der Erfindung liegt darin, dass der Anonymisierungsdienst auf einem entsprechend ausgestatteten mobilen Kommunikationsendgerät des Benutzers (Sender) realisiert ist. Es ist aber auch möglich den Anonymisierungsdienst z.B. durch eine App auf einem mobilen Kommunikationsendgerät des Benutzers zu installieren. Dies kann z.B. durch einen Download von einer Internetplattform eines entsprechenden Dienstproviders erfolgen.

Eine weitere vorteilhafte Ausgestaltung der Erfindung liegt darin, dass der Anonymisierungsdienst im Audiogerät integriert ist. Mit Vorteil ist in dieser Ausgestaltung das Audiogerät vorher als vertrauenswürdig eingestuft worden. In dieser Ausgestaltung ist der Anonymisierungsdienst im Audiogerät eingebettet (embedded). Der Anonymisierungsdienst kann z.B. in eine entsprechende Verarbeitungslogik (z.B. Mikroprozessor) des Audiogerätes eingebettet sein, z.B. als Software oder als Firmware.

Eine weitere vorteilhafte Ausgestaltung der Erfindung liegt darin, dass der Anonymisierungsdienst als vertrauenswürdige Netzwerkkomponente (Proxy) in einem Gebäudekommunikationsnetzwerk (z.B. Installationsbus, KNX) realisiert ist, und wobei das Audiogerät eine weitere vertrauenswürdige Netzwerkkomponente des Gebäudekommunikationsnetzwerkes ist. Ein Gebäudeautomatisierungssystem kann somit sehr leicht mit einem Anonymisierungsdienst versehen oder nachgerüstet werden. Mit Vorteil wird der Anonymisierungsdienst in die Infrastruktur des Gebäudekommunikationsnetzwerkes als Netzwerkkomponente integriert. Mit Vorteil durch eine Funkverbindung.

Eine weitere vorteilhafte Ausgestaltung der Erfindung liegt in einem computerlesbares Speichermedium, das Anweisungen speichert, die wenn sie von einem Computer ausgeführt werden, den Computer veranlassen, ein Verfahren zum Bereitstellen eines sprachbasierten Dienstes, insbesondere für die Ansteuerung von Geräten oder zur Ansteuerung von Programmen in einem Gebäude, durchzuführen, wobei das Verfahren umfasst:
Bereitstellen eines Anonymisierungsdienstes, der empfangene Sprachbefehle eines Benutzers so umwandelt, dass die Identität des Benutzers der Sprachbefehle anonymisiert wird, wobei der Anonymisierungsdienst die anonymisierten Sprachbefehle an einen Assistenzdienst ausgibt; und
Bereitstellen des Assistenzdienstes zum Empfangen der anonymisierten Sprachbefehle, wobei der Assistenzdienst die empfangenen anonymisierten Sprachbefehle analysiert, in entsprechende Bedienkommandos zur Ansteuerung von Geräten und/oder zur Ansteuerung von Programmen in einem Gebäude umwandelt und an diese weiterleitet. Gemäß der Erfindung umfasst das Verfahren außerdem die weiteren Merkmale von Anspruch 7.

Mit Vorteil werden die Anweisungen zum Implementieren der Verfahren und/oder des Systems auf nichtflüchtigen computerlesbaren Speichermedien oder Speichern bereitgestellt, wie Cache, Puffer, RAM, Wechselspeichermedien, Festplatten, SD-Karte, CD, USB-Speicherstick, oder andere computerlesbare Speichermedien. Die computerlesbaren Speichermedien können verschiedene Typen von flüchtigen und nichtflüchtigen Speichermedien sein. Die Funktionen oder Verfahrensschritte, die in der Beschreibung und in den Figuren beschrieben sind, werden in Reaktion auf einen oder auf mehrere Sätze von Anweisungen ausgeführt, die in oder auf einem computerlesbaren Speichermedium gespeichert sind. Die Funktionen oder Verfahrensschritte sind unabhängig von dem speziellen Typ von Befehlssatz, Speichermedium, Prozessor oder Verarbeitungsstrategie und können durch Software, Hardware, Firmware und dergleichen, allein oder in Kombination, ausgeführt werden.

Eine weitere vorteilhafte Ausgestaltung der Erfindung liegt in einem Computerprogrammprodukt, das auf einem Computer ausführbare Instruktionen enthält, die wenn sie von dem Computer ausgeführt werden, den Computer veranlassen, ein Verfahren zum Bereitstellen eines sprachbasierten Dienstes, insbesondere für die Ansteuerung von Geräten oder zur Ansteuerung von Programmen in einem Gebäude, durchzuführen, das Verfahren umfasst:
Bereitstellen eines Anonymisierungsdienstes, der empfangene Sprachbefehle eines Benutzers so umwandelt, dass die Identität des Benutzers der Sprachbefehle anonymisiert wird, wobei der Anonymisierungsdienst die anonymisierten Sprachbefehle an einen Assistenzdienst ausgibt; und
Bereitstellen des Assistenzdienstes zum Empfangen der anonymisierten Sprachbefehle, wobei der Assistenzdienst die empfangenen anonymisierten Sprachbefehle analysiert, in entsprechende Bedienkommandos zur Ansteuerung von Geräten und/oder zur Ansteuerung von Programmen in einem Gebäude umwandelt und an diese weiterleitet. Gemäß der Erfindung umfasst das Verfahren außerdem die weiteren Merkmale von Anspruch 8.

Mit Vorteil ist das Computerprogrammprodukt als Bibliothek und/oder als Programmmodul eines weiteren Computerprogrammprodukts ausgebildet. Mit Vorteil ist das Computerprogrammprodukt durch Software oder Firmware implementiert in einer geeigneten Programmiersprache implementiert. Mit Vorteil ist das Computerprogrammprodukt in ein Computersystem oder eine computerbasierte Infrastruktur eingebettet.

Die Erfindung sowie vorteilhafte Ausführungen der vorliegenden Erfindung werden am Beispiel der nachfolgenden Figuren erläutert. Dabei zeigen:
- FIG 1: ein erstes beispielhaftes System zum Bereitstellen eines sprachbasierten Dienstes, umfassend einen Anonymisierungsdienst,
- FIG 2: ein zweites beispielhaftes System zum Bereitstellen eines sprachbasierten Dienstes, umfassend einen Anonymisierungsdienst,
- FIG 3: ein drittes beispielhaftes System zum Bereitstellen eines sprachbasierten Dienstes, umfassend einen Anonymisierungsdienst,
- FIG 4: einen beispielhaften Anonymisierungsdienst, und
- FIG 5: ein beispielhaftes Flussdiagramm für ein Verfahren zum Bereitstellen eines sprachbasierten Dienstes, umfassend einen Anonymisierungsdienst.

Damit digitale intelligente persönliche Assistenten sinnvoll und bestimmungsgemäß funktionieren muss der Nutzer solcher Dienste viele persönliche Daten von sich preisgeben. Es obliegt der Verantwortung des Einzelnen zu entscheiden wie viel Privatsphäre man bereit ist aufzugeben. Insbesondere im Umfeld nichtselbstständiger Arbeit (z.B. an einem Arbeitsplatz in einem Unternehmen) muss ein Arbeitgeber z.B. aus Datenschutzgründen oder arbeitsrechtlicher Auflagen diesbezügliche Schutzmaßnahmen ergreifen. Geht der Arbeitgeber dabei zu restriktiv zur Sache, sinkt die Zufriedenheit bzw. die Akzeptanz der Angestellten. Der Arbeitgeber muss einen Weg finden, erwartete und gewohnte Komfortfeatures, in diesem Fall sprachbasierte digitale Assistenten, bereit zu stellen, ohne seine Ziele und Pflichten zu verletzen.

Ein Intelligenter Persönlicher Assistent (IPA) (oder: Sprachassistent) ist eine Software, welche u.a. Spracherkennung und -analyse, die Suche von Informationen oder das Abarbeiten einfacher Aufgaben und dann die Synthese von natürlich sprachigen Antworten verbindet. Das Ziel ist, eine intuitive Schnittstelle zwischen einem Anwender und einem System oder Gerät zu ermöglichen, damit Kommandos oder Suchanfragen "menschlicher" formuliert werden können (aus Wikipedia).

Bekannte Dienste großer Anbieter sind z.B. Microsoft Cortana, Amazon Alexa, Apple Siri oder Google Assistent. Diese Dienste werden derzeit entweder über ein Kommunikationsendgerät (z.B. Notebook, Smartphone, tablet computer) oder dedizierter Assistent-Hardware (z.B. Amazon Echo oder Google Home) genutzt. Ein Anwender übermittelt via Sprache und einer solchen Hardwarekomponente ein Kommando an ein dahinter liegendes "backend". Z.B. kann eine online-Übertragung zu einem oder mehreren Servern erfolgen. Dort wird der Sprachbefehl analysiert, ausgewertet und eine entsprechende Reaktion auf das Kommando generiert. Eine solche Reaktion kann z.B. eine sprachliche Antwort, oder aber eine übermittelte Aktion sein. Als Beispiel sei der Befehl "Schalte das Licht im Wohnzimmer ein" aufgeführt. Als Reaktion auf diesen Befehl würde der dahinterliegende Server einen Steuerungsbefehl an das der Anfrager-ID zugeordnetem Raumbedienelement übermitteln, z.B. einer verknüpften Lampensteuerung. Damit dies seitens des Dienste-anbieters möglich ist, muss dieser wissen von wem genau das Kommando kommt. Mit dieser Identität ist weiterhin das im Beispiel genannte Raumbedienelement verknüpft.

Die sog. "Artificial Intelligence"-Engine (z.B. KI-Software, wie ein Neuronales Netz) des Diensteanbieters lernt Verhalten, Gewohnheiten, Präferenzen der Nutzer, und kann so individuell passende Vorschläge, Lösungen oder Aktionen anbieten. Für die Diensteanbieter sind die Nutzer gläserne Kunden. Auch hier wird Datenschutz und Privatspähre zu Gunsten von persönlichem Komfortgewinn aufgegeben. Was aber im Privatbereich (z.B. im eigenen Haus oder in der eigenen Wohnung) möglich und erlaubt ist, ist aber in einem Unternehmen (insbesondere mit mehreren Mitarbeitern) aufgrund von gesetzlichen und/oder innerbetrieblicher Regularien verboten, denn es können z.B. auch firmenvertrauliche Daten via Intelligentem Persönlichen Assistent (IPA) übertragen werden.

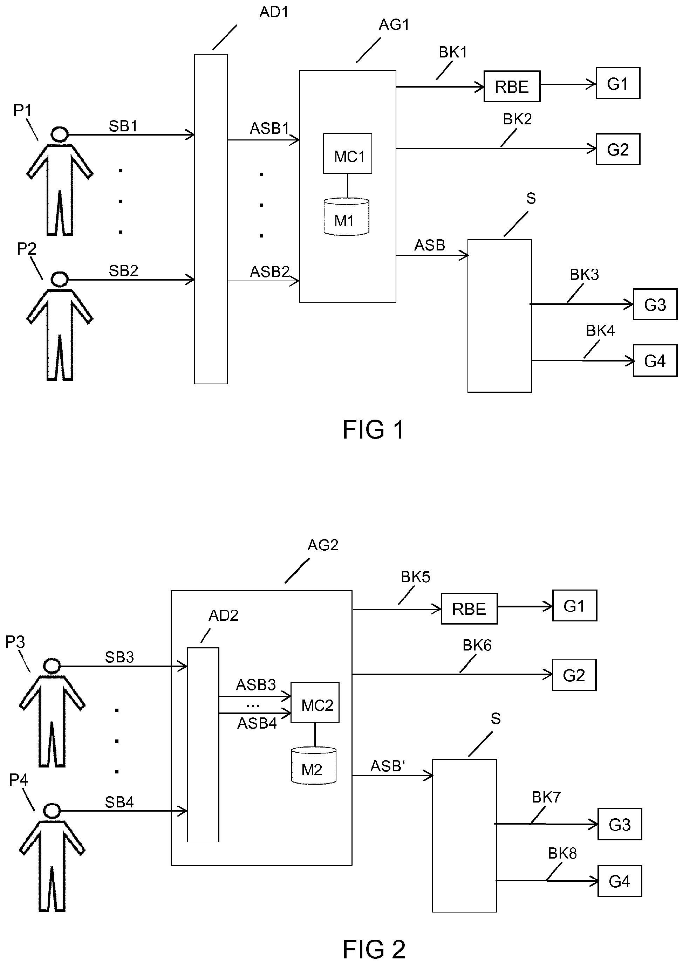

Figur 1 zeigt ein erstes beispielhaftes System zum Bereitstellen eines sprachbasierten Dienstes, insbesondere für die Ansteuerung von Raumbedienelementen RBE in Gebäuden. Das System gemäss Figur 1 umfasst einen Anonymisierungsdienst AD1, der eingerichtet ist Sprachbefehle SB1, SB2 eines Senders (Benutzers) P1, P2 zu empfangen und so umzuwandeln, dass die Identität des Senders (Benutzers) P1, P2 der Sprachbefehle SB1, SB2 anonymisiert ist, wobei der Anonymisierungsdienst AD1 weiter eingerichtet ist die anonymisierten Sprachbefehle ASB, ASB1, ASB2 für ein Audiogerät AG1 bereitzustellen bzw. an ein Audiogerät AG1 (z.B. Amazon Echo) zu senden. Weiterhin umfasst das System gemäss Figur 1 ein Audiogerät AG1 (z.B. Amazon Echo/Alexa; digitale Assistenzdienste) zum Empfangen der anonymisierten Sprachbefehlen ASB1, ASB2 wobei das Audiogerät AG1 eingerichtet ist die empfangenen Sprachbefehle ASB1, ASB2 zu analysieren (NLP, natural language processing), in entsprechende Bedienkommandos BK1 - BK4 für Raumbedienelemente RBE zur Ansteuerung von HVAC-Geräten (z.B. Feldgeräten, Aktoren) G1 - G4 in einem Gebäude umzuwandeln und an die entsprechenden Raumbedienelemente RBE oder direkt an die HVAC-Geräte G1 - G4 (z.B. Aktoren zur Komfortsteuerung in einem Gebäude) weiterzuleiten.

HVAC-Geräte G1 - G4 können z.B. sein: Heizung, Lüftungsanlagen, Klimaanlagen, Lichtsysteme, Dimmer, Antriebe für Jalousien). Raumbedienelemente RBE sind z.B. Raumgeräte oder Steuergeräte zum Bedienen, Regel, oder Steuern von Komfortgrössen (z.B. Temperatur, Licht, Blendung) in einem Raum.

Durch den Anonymisierungsdienst AD1 werden die Sprachbefehle SB1, SB2 des Benutzers P1, P2 anonymisiert, z.B. durch Sprachverzerrung oder durch Umwandlung der Sprachbefehle SB1, SB2 in eine konstruierte, fiktionale Sprache (wie z.B. die Sprachausgabe bei einem Navigationsgerät). Der Anonymisierungsdienst AD1 ist dazu entsprechend eingerichtet, d.h. mit entsprechender Hardware und Software ausgestattet.

Das nicht-vertrauenswürdige Audiogerät AG1 umfasst geeignete Schnittstellen zum Empfangen der anonymisierten Sprachbefehle ASB1, ASB2. Optional umfasst das Audiogerät AG1 Mechanismen zum Analysieren der Sprachbefehl ASB1, ASB2 und zum Generieren entsprechender Bedienkommandos BK1 - BK4 zur Ansteuerung von Geräten oder Programmen (z.B. HVAC- oder Feldgeräten) in einem Gebäude mit den jeweiligen Bedienkommandos BK1 - BK4. Die Bedienkommandos BK1 - BK4 können vom Audiogerät AG1 direkt an die jeweiligen HVAC-Geräte übertragen werden, z.B. durch eine geeignete Funkverbindung (z.B. WLAN, Bluetooth). Die Bedienkommandos BK1 - BK4 können vom Audiogerät AG1 aber auch an entsprechende Raumbedienelemente RBE übertragen werden. Die entsprechenden Raumbedienelemente RBE leiten die Bedienkommandos BK1 - BK4 an die jeweiligen HVAC-Geräte weiter, z.B. auch durch eine geeignete Funkverbindung (z.B. WLAN, Bluetooth). Das Audiogerät AG1 ist dazu mit geeigneter Hardware ausgestattet (z.B. Prozessor MC1 und einem Speicher M1) zur Ausführung entsprechender Verarbeitungslogik und entsprechender Software (z.B. KI-Programme, neuronale Netze, Deep Learning Algorithmen). Der Speicher M1 kann z.B. eine Sprachcache sein, der standardisierte bzw. häufig verwendete Sprachbefehle umfasst, die dann zur Anonymisierung verwendet werden.

Optional können vom Audiogerät AG1 anonymisierte Sprachbefehle ASB an einen Server S weitergeleitet werden. Der Server S umfasst geeignete Hardware und Software zum Analysieren der Sprachbefehle ASB und zum Generieren entsprechender Bedienkommandos BK3, BK4 zur Ansteuerung der entsprechenden HVAC-Geräte G3, G4 mit den jeweiligen Bedienkommandos BK3, BK4.

Mit Vorteil umfasst das Audiogerät AG1 und der Server S eine "Artificial Intelligence"-Engine (z.B. KI-Software, wie ein Neuronales Netz).

Mit Vorteil ist der Anonymisierungsdienst AD1 als Netzwerkkomponente (Proxy) in einem Gebäudekommunikationsnetzwerk (z.B. Installationsbus, KNX) realisiert und das Audiogerät AG1 ist eine weitere Netzwerkkomponente des Gebäudekommunikationsnetzwerkes. Ein Gebäudeautomatisierungssystem kann somit sehr leicht mit einem Anonymisierungsdienst versehen oder nachgerüstet werden. Mit Vorteil werden der Anonymisierungsdienst AD1 und das Audiogerät AG1 in die Infrastruktur des Gebäudekommunikationsnetzwerkes als Netzwerkkomponenten (Network Notes; z.B. als BacNet Objekte) integriert. Mit Vorteil durch eine Funkverbindung.

Figur 2 zeigt ein zweites beispielhaftes System zum Bereitstellen eines sprachbasierten Dienstes, insbesondere für die Ansteuerung von Raumbedienelementen RBE in Gebäuden. Das System gemäss Figur 2 umfasst einen Anonymisierungsdienst AD2, der eingerichtet ist Sprachbefehle SB3, SB4 eines Senders (Benutzers) P3, P4 zu empfangen und so umzuwandeln, dass die Identität des jeweiligen Senders (Benutzers) P3, P4 der Sprachbefehle SB3, SB4 anonymisiert ist, wobei der Anonymisierungsdienst AD2 weiter eingerichtet ist die anonymisierten Sprachbefehle ASB', ASB3, ASB4 für ein Audiogerät AG2 (z.B. Amazon Echo) bereitzustellen. Im beispielhaften System gemäss Figur 2 ist der Anonymisierungsdienst AD2 im vertrauenswürdigen Audiogerät AG2 integriert, Z.B. als eine Hardware- und/oder Softwarekomponente des Audiogerätes AG2 (z.B. Amazon Echo/Alexa; digitale Assistenzdienste). Das Audiogerät AG2 ist eingerichtet, die anonymisierten Sprachbefehle ASB3, ASB4 zu analysieren (NLP, natural language processing), in entsprechende Bedienkommandos BK5 - BK8 zur Ansteuerung von Geräten (z.B. HVAC-, Feldgeräten, Aktoren) G1 - G4 in einem Gebäude umzuwandeln und die Bedienkommandos BK5 - BK8 an die entsprechenden Raumbedienelemente RBE oder direkt an die HVAC-Geräte G1 - G4 (z.B. Aktoren zur Komfortsteuerung in einem Gebäude) oder andere Empfänger weiterzuleiten.

Optional können vom vertrauenswürdigen Audiogerät AG2 anonymisierte Sprachbefehle ASB' an einen vertrauenswürdigen Server S weitergeleitet werden. Der Server S umfasst geeignete Hardware und Software zum Analysieren der Sprachbefehle ASB' und zum Generieren entsprechender Bedienkommandos BK7, BK8 zur Ansteuerung der entsprechenden HVAC-Geräte G3, G4 mit den jeweiligen Bedienkommandos BK7, BK8. Mit Vorteil umfassen das Audiogerät AG2 und der Server S eine "Artificial Intelligence"-Engine (z.B. KI-Software, wie ein Neuronales Netz).

Das Audiogerät AG2 ist mit geeigneter Hardware ausgestattet (z.B. Prozessor MC2 und einem Speicher M2) zur Ausführung entsprechender Verarbeitungslogik und entsprechender Software (z.B. KI-Programme, neuronale Netze, Deep Learning Algorithmen). Der Speicher M2 kann z.B. eine Sprachcache sein, der standardisierte bzw. häufig verwendete Sprachbefehle umfasst, die dann zur Anonymisierung verwendet werden.

Die Integration des Anonymisierungsdienst AD2 im Audiogerät AG2 ermöglicht es, das Audiogerät AG2 mit Anonymisierungsdienst AD2 als eine Baueinheit zu vertreiben und zu verwenden. Dies erleichtert u.a. die Installation in einem Gebäude, setzt aber voraus, dass AG2 ein vertrauenswürdiges Gerät ist in dem Sinn, dass der Betrieb der Anonymisierungsschicht AD2 getrennt ist von dem Betrieb des Sprachanalysedienstes.

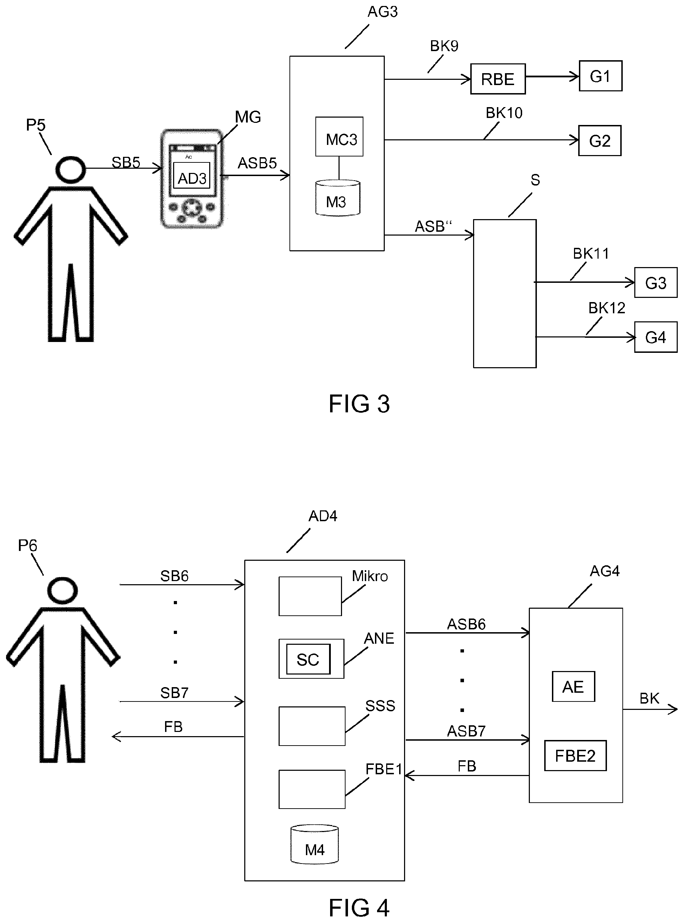

Figur 3 zeigt ein drittes beispielhaftes System zum Bereitstellen eines sprachbasierten Dienstes, insbesondere für die Ansteuerung von Raumbedienelementen RBE in Gebäuden. Das System gemäss Figur 3 umfasst einen Anonymisierungsdienst AD3, der eingerichtet ist Sprachbefehle SB5 eines Senders (Benutzers) P5 zu empfangen und so umzuwandeln, dass die Identität des jeweiligen Senders (Benutzers) P5 der Sprachbefehle SB5 anonymisiert ist, wobei der Anonymisierungsdienst AD3 weiter eingerichtet ist die anonymisierten Sprachbefehle ASB5 für ein Audiogerät AG3 (z.B. Amazon Echo) bereitzustellen. Im beispielhaften System gemäss Figur 3 ist der Anonymisierungsdienst AD3 auf einem entsprechend ausgestatteten mobilen Kommunikationsendgerät MG (z.B. Smartphone, Tablet-Computer) des Benutzers (Sender) P5 realisiert. Z.B. als eine App, die durch einen entsprechenden Download vom Internet auf das mobile Kommunikationsendgerät MG geladen und installiert worden ist.

Der Benutzer P5 spricht einen Sprachbefehl SB5 (z.B. "erhöhe Temperatur um 3 Grad"), dieser Sprachbefehl SB5 wird vom Mikrophon des Kommunikationsendgerätes MG erfasst, durch den Anonymisierungsdienst AD3 in einen anonymisierten Sprachbefehl ASB5 umgewandelt, z.B. durch eine Sprachverzerrung. Das nicht-vertrauenswürdige Audiogerät AG3 ist eingerichtet die anonymisierten Sprachbefehle ASB5 zu analysieren (NLP, natural language processing), in entsprechende Bedienkommandos BK9 - BK12 (z.B. digitale Darstellung eines Befehles) für Raumbedienelemente RBE zur Ansteuerung von HVAC-Geräten (z.B. Feldgeräten, Aktoren) G1 - G4 in einem Gebäude umzuwandeln und die Bedienkommandos BK9 - BK12 an die entsprechenden Raumbedienelemente RBE oder direkt an die HVAC-Geräte G1 - G4 (z.B. Aktoren zur Komfortsteuerung in einem Gebäude) weiterzuleiten.

Das Audiogerät AG3 ist mit geeigneter Hardware ausgestattet (z.B. Prozessor MC3 und einem Speicher M3) zur Ausführung entsprechender Verarbeitungslogik und entsprechender Software (z.B. KI-Programme, neuronale Netze, Deep Learning Algorithmen). Der Speicher M3 kann z.B. eine Sprachcache sein, der standardisierte bzw. häufig verwendete Sprachbefehle umfasst, die dann zur Anonymisierung verwendet werden.

Optional können vom Audiogerät AG3 anonymisierte Sprachbefehle ASB" an einen Server S weitergeleitet werden. Der Server S umfasst geeignete Hardware und Software zum Analysieren der Sprachbefehle ASB" und zum Generieren entsprechender Bedienkommandos BK11, BK12 zur Ansteuerung der entsprechenden HVAC-Geräte G3, G4 mit den jeweiligen Bedienkommandos BK11, BK12.

Figur 4 zeigt einen beispielhaften Anonymisierungsdienst AD4. Ein Anonymisierungsdienst bzw. Anonymisierungslayer AD4 kann durch entsprechende Hardware, Software, bzw. Firmware realisiert werden. Mit Vorteil agiert der Anonymisierungsdienst bzw. der Anonymisierungslayer AD4 als ein einem Audiogerät AG4 (z.B. Amazon Echo) vorgeschalteter Proxy, der einen empfangenen Sprachbefehl SB6 - SB7 für das Audiogerät AG4 in anonymisierter Form bereitstellt bzw. weiterleitet. Der Anonymisierungsdienst AD4 umfasst einen entsprechend eingerichteten Prozessor (z.B. Mikroprozessor) mit entsprechender Verarbeitungslogik (Softwareprogramme), um seine Dienste bereitzustellen.

Mit Vorteil ist der Anonymisierungsdienst der Sprachanalyseschicht vorgeschaltet und wird mit Vorteil getrennt von der Sprachanalyseschicht betrieben.

Ein Benutzer P6 gibt Sprachbefehle SB6, SB7 ab, die vom Mikrophon Mikro (z.B. ein handelsübliches Mikrophon) des Anonymisierungsdienstes AD4 erfasst und von der Anonymisierungseinheit ANE des Anonymisierungsdienstes AD4 anonymisiert werden, so dass kein Rückbezug zum Benutzer P6 möglich ist. Die Anonymisierungseinheit ANE kann z.B. als Sprachverzerrer realisiert sein. Die Anonymisierungseinheit ANE kann aber auch die Sprachbefehle SB6, SB7 eines Benutzers P6 in eine konstruierte, fiktionale Sprache umwandeln, z.B. durch ein randomisiertes Ersetzen von Wörtern, die mit Vorteil in einem Sprachcache SC der Anonymisierungseinheit ANE bereitgestellt werden. Der Sprachcache SC kann in der Anonymisierungseinheit ANE oder im Speicher SC gehalten werden.

Die von der Anonymisierungseinheit ANE zu anonymisierenden Sprachbefehle SB6, SB7 werden vom Anonymisierungsdienst AD4 über eine entsprechend eingerichtete Sendeschnittstelle SSS dem Audiogerät AG4 (z.B. Amazon Echo) und dem entsprechenden Assistenzdienst (z.B. Amazon Alexa) als anonymisierte Sprachbefehle ASB6, ASB7 bereitgestellt bzw. weitergeleitet, z.B. durch eine geeignete Kommunikationsverbindung. Mit Vorteil über eine drahtlose Kommunikationsverbindung (z.B. NFC, Bluetooth, WLAN).

Das Audiogerät AG4 (z.B. Amazon Echo) bzw. der entsprechende Assistenzdienst (z.B. Amazon Alexa) umfasst eine Analyse-Engine AE, um die anonymisierten Sprachbefehle ASB6, ASB7 zu analysieren (z.B. durch NLP, natural language processing) und die entsprechenden Bedienkommandos BK zur Ansteuerung von Geräten oder Programmen (z.B. HVAC- oder Feldgeräten) in einem Gebäude, zu generieren. Die Analyse-Engine AE führt somit eine syntaktische und semantische Analyse der anonymisierten Sprachbefehle ASB6, ASB7 durch und umfasst einen Generator zum generieren der entsprechenden Bedienkommandos BK zur Ansteuerung und Beeinflussung der Feldgeräte (z.B. z.B. zur Steuerung des Lichtes oder der Heizung).

Mit Vorteil wird einem Benutzer P6 ein Feedback FB auf seine Sprachbefehle SB6, SB7 gegeben, wobei sichergestellt ist, dass das Audiogerät AG4 (z.B. Amazon Echo) bzw. der entsprechende Assistenzdienst (z.B. Amazon Alexa) keinen Rückschluss auf den Feedbackempfänger, d.h. dem Benutzer machen können.

Das Feedback FB kann z.B. eine Sprachnachricht, oder eine Anzeige oder Textnachricht auf einem Display sein, das am Audiogerät AG4 angebracht ist. Beim Feedback FB kann es sich um eine reine Information (z.B. "Aktuelle Raumtemperatur 20 Grad") handeln oder um eine Empfehlung für den Benutzer P6 durch Auswertung seiner früheren Sprachbefehle SB6, SB7. Die Auswertung erfolgt in einer Feedbackeinheit FBE1, FBE2 durch Methoden der Künstlichen Intelligenz (z.B. Deep Learning, Neuronale Netze). Mit Vorteil verwendet die Feedbackeinheit FBE1, FBE2 auch historische Daten, die z.B. im Speicher M4 abgelegt sind. Die Feedbackeinheit FBE1, FBE2 kann sich im Anonymisierungsdienst AD4 und/oder im Audiogerät AG4 befinden. Wird das Feedback FB durch das Audiogerät AG4 bereitgestellt, sorgt der Anonymisierungsdienst AD4 unabhängig vom Audiogerät AG4 und unabhängig vom Assistenzdienst für eine dedizierte Zuordnung des Feedbacks FB zum jeweiligen Benutzer P6. Dies kann z.B. durch Auswertung von Metainformationen (z.B. Merkmalen bezüglich Satzbau, Wortwahl, Frequenzspektrum) aus den Sprachbefehlen erfolgen.

Mit Vorteil erfolgt durch den Anonymisierungsdienst AD4 eine Singularisierung der Sprachbefehle SB6, SB7. D.h. die Sprachbefehle SB6, SB7 einer Masse (Anzahl) von Benutzern werden einer Benutzergruppe zugeordnet. Z.B. werden Sprachbefehle SB6, SB7 eines jeweiligen Benutzers P im Namen einer bestimmten Gruppe von Benutzern (z.B. eine bestimmte Abteilung) durchgeführt, egal wie viele individuelle Benutzer sich dahinter befinden. Die Rückzuordnung findet immer bezüglich dieser Gruppe statt und nicht bezüglich des individuellen Benutzers, der einen Sprachbefehl abgesetzt hatte. Damit ist eine Nutzung eines derartigen Assistenzdienstes (z.B. Amazon Alexa) innerhalb eines Unternehmens möglich, obwohl dies aus Datenschutzgründen eigentlich verboten wäre.

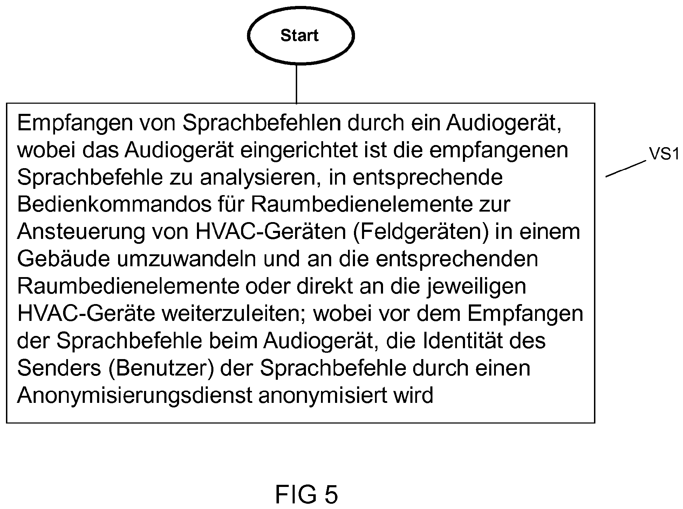

Figur 5 zeigt ein beispielhaftes Flussdiagramm für ein Verfahren zum Bereitstellen eines sprachbasierten Dienstes, umfassend einen Anonymisierungsdienst. Das Verfahren ist insbesondere für die Ansteuerung von Raumbedienelementen in Gebäuden geeignet.

Das Verfahren umfasst:
(VS1) Empfangen von Sprachbefehlen durch ein Audiogerät, wobei das Audiogerät eingerichtet ist, die empfangenen Sprachbefehle zu analysieren (NLP, natural language processing), in entsprechende Bedienkommandos zur Ansteuerung von Geräten (z.B. HVAC- oder Feldgeräte) und/oder Programmen (z.B. Programme einer Gebäudemanagementstation) in einem Gebäude umzuwandeln und an entsprechenden Raumbedienelemente oder direkt an die jeweilige Gebäudeinfrastrukturtechnik weiterzuleiten;
wobei vor der Auswertung der Sprachbefehle durch einen entsprechenden Spracherkennungsdienst (Assistenzdienst, z.B. Amazon Alexa) die Identität des Senders (Benutzer) der Sprachbefehle durch einen separaten und vertrauenswürdigen Anonymisierungsdienst anonymisiert wird.

Der Anonymisierungsdienst kann z.B. im Audiogerät realisiert werden oder auf einem dem entsprechenden virtuellen Assistenten (z.B. Amazon Alexa) vorgelagerten Proxy.

Durch die vom Audiogerät (z.B. Amazon Echo) wird ein Assistenzdienst (z.B. Amazon Alexa) aktiviert, der die entsprechenden Kommandos für die HVAC-Geräte bzw. Feldgeräte generiert, um eine Komfortsteuerung (z.B. Temperatursteuerun, Lichtsteuerung) in einem Raum oder einem Gebäude zu bewirken.

Mit Vorteil erfolgt die Anonymisierung durch eine randomisierte Sprachverfremdung, z.B. basierend auf Worten, Sätzen, oder Satzteilen aus einem Sprachcache bereitgestellt werden.

Die Anonymisierung erfolgt derart, dass eine Rückverfolgbarkeit zwischen dem Sender und dem Anonymisierungsdienst gegeben ist, aber nicht zwischen dem Sender und dem Audiogerät.

Basierend auf der Analyse der empfangenen Sprachbefehle wird im Audiogerät ein Feedback generiert, welches vom Anonymisierungsdienst einem dedizierten Sender zugeordnet wird.

Mit Vorteil wird das Verfahren durch ein entsprechendes computerunterstütztes System (z.B. Mikrocomputer), welches im Audiogerät implementiert ist, realisiert.

Der Anonymisierungsdienst kann aber auch auf einem mobilen Kommunikationsendgerät (z.B. Smartphone, Tablet-Computer) eines Benutzers realisiert werden.

Erfinderische Merkmale und Vorteile der vorliegenden Erfindung für System und Verfahren, und insbesondere auch für das Computerprogrammprodukt bzw. das computerlesbare Speichermedium sind insbesondere:
Durch Nutzung einer Anonymisierungsschicht können Arbeitnehmer auf zur Verfügung gestellter Hardware (Kommunikationsendgeräte oder andere dedizierte Hardware zur Nutzung von digitalen Assistenten) auf datenschutzgewährleistende Weise Assistenzdienste von Dienste-/Drittanbietern (z.B. Amazon Echo, Alexa) zur Nutzung im Arbeitsumfeld verwenden. Auch kann auf nicht vom Arbeitgeber bereitgestellter Hardware (z.B. Smartphone) eine Anonymisierungsschicht-bereitstellende Software/app genutzt werden.

Eine solche Anonymisierungsschicht (Software) kann entweder auf dem Kommunikationsendgerät, auf einem zwischengeschalteten Gerät oder innerhalb der Serverlandschaft des Arbeitgebers oder eines beauftragten Dienstleisters liegen.

Die Anonymisierung erlaubt die Nutzung von Assistenzdiensten wir z.B. Amazon Alexa, unter Beibehaltung des Datenschutzes.

Damit eine individuelle Anfrage beantwortet werden kann, wird die Anfrage-Identität bzw. die Anfrager-Identität in Richtung Assistenzdienst anonymisiert. Bei Antwort des Assistenzdienstes wird diese wieder dem eigentlichen Benutzer zugeordnet, so dass eine zielgerichtete Antwort/Reaktion möglich ist.

Der Anonymisierungsdienst fragt also als "Proxy" für den eigentlich Anfragenden (Benutzer) an und verschleiert damit dessen Identität. Damit verschiebt sich das Vertrauensverhältnis zwar zunächst nur (der Endanwender muss nun dem Proxy vertrauen anstatt dem Dienstleister), aber dies ist ein entscheidender Unterschied:
Im kommerziellen Gebäudeumfeld kommen nämlich Spezialitäten zum Tragen, die zu einer Anonymisierung ausgenutzt werden können:
- Solche "Proxies" können direkt unter der Kontrolle des Endkunden selbst stehen; oder unter der Kontrolle eines Partners, dem der Endkunde vertraut.
- Weiterhin sind alle Geräte eines Standortes sowohl lokal vernetzt als auch immer mehr mit regionalen, nationalen oder gar globalen Datencentern verschaltet. Dies sind wiederum entweder Endkunden-eigene Datencenter oder solche von trusted-Partners des Endkunden. Da der Proxy als *eine* Instanz gegenüber dem Dienstleister auftritt, wird die Anonymität gegenüber dem Dienstleister umso besser, je grösser der "Pool" an Anfragenden ist.
- Für die meisten Anwendungsfälle im Gebäudeumfeld ist es unerheblich, welche Person den Sprachbefehl gibt. Die *konkrete Person* kann daher bereits lokal durch eine *abstrakte Person* ersetzt werden. Dies kann z.B. gemacht werden:
   - Absichtlich verlustbehaftet und damit nicht mehr umkehrbar (z.B. durch eine randomisierte Sprachverfremdung direkt im Gerät oder an jeder anderen Stelle bevor der Dienstleister aufgerufen wird);
   - Absichtlich verfremdet aber lokal umkehrbar (wie zuvor, aber die randomisierende Instanz hält lokal die Verbindung zum Anfragenden): Dies erlaubt persönliche Profile, die aber eben nur dem Proxy bekannt sind und nicht dem Dienstleister;
   - In beiden zuvor genannten Fällen kann die eigentlich anfragende Person anonym bleiben, weil sie sich zum sprachgesteuerten Gerät hin zwar identifizieren *kann* (=so sie will), aber eben nicht *muss:* Wie erwähnt wird die Aktion letztlich konzeptionell für eine Entität eines *Gebäudes* ausgeführt (z.B.einen Raum), nicht für einen *Benutzer.*
- Der Anonymisierungsgrad eines solchen Proxy-Ansatzes kann durch weitere Massnahmen erhöht werden:
   - Mixe: Der Proxy fragt randomisiert mehr als einen Dienstleister ab. Oder die Abfragen werden mit Proxies von anderen trusted Partners gemischt. In beiden Fällen erhöht sich die Entropie, was eine Rückverfolgbarkeit seitens des/der Dienstleister(s) erschwert;
   - Cacheing: Die Wahrscheinlichkeit, dass dieselben Steuerbefehle gegeben werden, erhöht sich sowohl über die Zeit hinweg als auch über die Menge der vernetzten Gebäude hinweg massiv.
   - Ein Sprachcache (siehe Figur 4) kann mit hoher Wahrscheinlichkeit einen Großteil der Sprachbefehle erlernen und direkt aus dem Cache bedienen anstatt den Dienstleister befragen zu müssen. Dies erhöht nicht nur die Anonymität, sondern erhöht natürlich auch die Performanz der Anlage. Desweiteren dürften damit auch die Kosten optimiert werden, da Sprachdienstleister ihre Dienste typischerweise nach der Anzahl der erfolgten Anfragen abrechnen;
   - Sprachcaches (siehe Figur 4) können untereinander (anonym) abgeglichen werden: Da Sprachbefehle sehr häufig zu Gebäudestrukturen korrelieren, kann die Erkennungsrate massiv verbessert werden. Zum einen, weil der Proxy weiss, wo der Befehl abgesetzt wurde
   (z.B. werden Jalousiesteuerungsbefehle nur in Räumen abgesetzt, in denen auch Jalousien vor den Fenstern sind; umgekehrt darf ein System natürlich in jedem Raum, in dem Jalousien vor den Fenstern sind, auch Sprachbefehle für sie *erwarten*). Zum anderen, weil in ähnlichen Entitäten eines Gebäudes (z.B. "Räume mit Jalousien vor dem Fenster") weltweit auch ähnliche Sprachbefehle zu erwarten sind.
- Anonymisierung der anfragenden Dienstnutzer (speziell aus Sicht des Diensteanbieters).
- Möglichkeit der Bildung von logischen Nutzer-Cluster: so könnten zum Beispiel alle Assistenzanfragen eines Gebäudes unter diesem "Dach" zur Auswertung zusammengefasst werden; dies wiederum ermöglicht eine Auswertung hinsichtlich von Optimierungspotential (was wird besonders oft angefragt - > wäre es möglich diese Funktion per default anzubieten um Anfragen zu reduzieren?; "wo drückt der Schuh" der Nutzer -> wäre hier Abhilfe machbar?); Auswertung hinsichtlich einzelner Gebäude (so denn ein Nutzer-Cluster aus allen Nutzern innerhalb eines Gebäudes besteht) und damit Vergleichsmöglichkeit zwischen logischen Clustern.
- Durch logische Anfragebündelung kann die Intelligenz (z.B. das entsprechende KI-Programm, Neuronale Netz) des Diensteanbieters noch immer die Gewohnheiten etc. lernen, d.h. besser werden und sich auf den Nutzer einstellen, ohne den einzelnen Anfrager zu kennen; der logische Cluster, die Struktur, tritt als Dienstnutzer auf - entsprechend lernt die AI-Engine (KI-Maschine) die Vorlieben etc. dieser Struktur, z.B. einem speziellen Gebäude (entspricht die Summe der von diesem Cluster ausgehenden Anfragen).
- Möglichkeit zur Nutzung von beliebigen / beliebig vielen Assistenzdiensten unter einer Oberfläche (auf Nutzerseite); dadurch je nach Frage-/Aufgabenstellung Nutzung des besten/sinnvollsten Dienstes ohne das sich der eigentliche Nutzer darum kümmern muss; dadurch ist weiterhin eigenes branding/UI auf Seiten des Benutzers, d.h. auf Nutzerseite möglich.
- Möglichkeit ein "pre-parsing" der Anfrage zu machen: dabei wird z.B. innerhalb der IT des Arbeitgebers die von einem Nutzer abgesetzte Anfrage an den Sprachdienst vor Weiterleitung an den eigentlichen Dienstanbieter des virtuellen Assistenzdienstes semantisch untersucht. Je nach Inhalt/Kontext der Anfrage wird der entsprechend "beste" (dies können auch monetäre, vertragliche, etc. Gründe sein, und ist nicht auf Ergebnisqualität limitiert) AI-Dienst (d.h. der beste virtuelle Assistenzdienst) selektiert, und an diesen die Anfrage geroutet. Hierbei kann wiederum von der Möglichkeit der "Cluster-Anonymiserung" Gebrauch gemacht werden.
- Eine weitere Möglichkeit des Datenschutzes besteht darin dass vor Anfrage an einen AI-Dienst (Assistenzdienst) eine Sprachummodulation durchgeführt werden kann; dabei wird die Sprachanfrage z.B. in Höhe / Modulation / Geschwindigkeit verändert (z.B. Sprache von Angestelltem X wird in synthetische Sprache umgewandelt).
- Eine weitere Möglichkeit besteht darin eine Spracherkennung (Speech to Text) bereits vor Abfrage an den Diensteanbieter durchzuführen, und den erkannten Speech to Text Inhalt via Schnittstellen (APIs) an den Dienstanbeiter zu übermitteln. Dies bedeutet einfache Anonymisierung als auch Übertragungseffizienz.
- Die Nutzung des Beschriebenen ist auch im Privatumfeld möglich, und nicht nur auf das gewerblich/kommerzielle Umfeld beschränkt.
- Nutzung von AI-/Sprachassistenten (z.B. Alexa von Amazon, Google Assistant, Google Now) kommerzieller grosser Anbieter (Amazon, Google, etc.) im betrieblichen Arbeitssumfeld, unter Beibehaltung von datenschutzbedingter Auflagen und Vorsichtsmassnahmen möglich.

Verfahren und System zum Bereitstellen eines sprachbasierten Dienstes, insbesondere für die Ansteuerung von Raumbedienelementen in Gebäuden, wobei durch ein Audiogerät Sprachbefehle empfangen werden, wobei das Audiogerät eingerichtet ist die empfangenen Sprachbefehle zu analysieren, in entsprechende Bedienkommandos für Raumbedienelemente zur Ansteuerung von insbesondere HVAC-Geräten (z.B. Feldgeräten) in einem Gebäude umzuwandeln und an die entsprechenden Raumbedienelemente weiterzuleiten; und wobei vor dem Empfangen der Sprachbefehle beim Audiogerät, die Identität des Senders (Benutzer) der Sprachbefehle durch einen Anonymisierungsdienst anonymisiert wird.

### Bezugszeichen

- P1 - P6: Benutzer
- MG: Mobiles Gerät
- SB1 - SB7: Sprachbefehl
- ASB1 - ASB7,ASB,ASB',ASB": Anonymisierter Sprachbefehl
- BK1 - BK12, BK: Bedienkommando
- RBE: Raumbedienelement
- AD1 - AD4: Anonymisierungsdienst
- AG1 - AG4: Audiogerät
- MC1 - MC3: Prozessor
- M1 - M4: Speicher
- Mikro: Mikrophon
- ANE: Anonymisierungseinheit
- AE: Analyse-Engine
- SSS: Sendeschnittstelle
- FBE1, FBE2: Feedbackeinheit
- SC: Sprachcache
- FB: Feedback
- S: Server
- G1 - G4: Gerät
- VS1: Verfahrensschritt

## Patentansprüche

1. Verfahren zum Bereitstellen eines sprachbasierten Dienstes, insbesondere für die Ansteuerung von Gebäudeinfrastrukturtechnik, das Verfahren umfassend:
Empfangen von Sprachbefehlen (SB1-SB7, ASB1-ASB7, ASB, ASB', ASB") durch ein Audiogerät (AG1 - AG4), wobei das Audiogerät (AG1 - AG4) eingerichtet ist, die empfangenen Sprachbefehle (SB1-SB7, ASB1-ASB7, ASB, ASB', ASB'') zu analysieren, in entsprechende Bedienkommandos (BK1 - BK12, BK) zur Ansteuerung von Geräten (G1 - G4) und/oder Programmen, z.B. HVAC- oder Feldgeräte, in einem Gebäude umzuwandeln und an entsprechende Raumbedienelemente (RBE) oder direkt an die jeweilige Gebäudeinfrastrukturtechnik weiterzuleiten;
wobei vor einer Auswertung der Sprachbefehle (SB1-SB7, ASB1-ASB7, ASB, ASB', ASB'') die Identität des Benutzers (P1 - P6), d.h. des Senders der Sprachbefehle (SB1-SB7) durch einen separaten und vertrauenswürdigen Anonymisierungsdienst (AD1 - AD4) anonymisiert wird,
wobei der Anonymisierungsdienst (AD1 - AD4) als ein dem Audiogerät (AG1 - AG4) vorgeschalteter Proxy agiert, der einen empfangenen Sprachbefehl (SB1-SB7, ASB1-ASB7, ASB, ASB', ASB") für das Audiogerät (AG1 - AG4) in anonymisierter Form bereitstellt bzw. weiterleitet,
wobei die Anonymisierung derart erfolgt, dass eine Rückverfolgbarkeit zwischen dem Benutzer (P1 - P6), d.h. dem Sender der Sprachbefehle (SB1-SB7) und dem Anonymisierungsdienst (AD1 - AD4) gegeben ist, aber nicht zwischen dem Benutzer (P1 - P6), d.h. dem Sender der Sprachbefehle (SB1-SB7) und dem Audiogerät,
wobei basierend auf der Analyse der empfangenen Sprachbefehle (SB1-SB7) das Audiogerät (AG1 - AG4) ein Feedback (FB) generiert, welches vom Anonymisierungsdienst (AD1 - AD4) dem jeweiligen dedizierten Benutzer (P1 - P6), d.h. dem Sender der Sprachbefehle (SB1-SB7) zugeordnet wird,
wobei der Anonymisierungsdienst (AD1 - AD4) durch Auswertung von Metainformationen bildenden Merkmalen aus den Sprachbefehlen (SB1-SB7), unabhängig vom Audiogerät (AG1 - AG4) und unabhängig von einem zur Spracherkennung eingerichteten, softwarebasierten Sprachassistent für eine dedizierte Zuordnung des Feedbacks (FB) zum jeweiligen Benutzer (P1 - P6), d.h. dem Sender der Sprachbefehle (SB1-SB7) sorgt.

2. Verfahren nach Anspruch 1, wobei die Anonymisierung durch eine randomisierte Sprachverfremdung erfolgt.

3. System zum Bereitstellen eines sprachbasierten Dienstes, insbesondere für die Ansteuerung von Raumbedienelementen (RBE) in Gebäuden, das System umfasst:
einen vertrauenswürdigen Anonymisierungsdienst (AD1 - AD4), der eingerichtet ist, Sprachbefehle (SB1 - SB7) eines Benutzers (P1 - P6) zu empfangen und so umzuwandeln, dass die Identität des Benutzers (P1 - P6), d.h. des Senders der Sprachbefehle (SB1 - SB7) anonymisiert ist, wobei der Anonymisierungsdienst (AD1 - AD4) weiter eingerichtet ist, die anonymisierten Sprachbefehle (ASB1 - ASB7,ASB,ASB',ASB'') für ein Audiogerät (AG1 - AG4), insbesondere ein nicht vertrauenswürdiges Audiogerät, bereitzustellen;
ein Audiogerät (AG1 - AG4), insbesondere ein nicht vertrauenswürdiges Audiogerät, zum Empfangen der anonymisierten Sprachbefehle (ASB1 - ASB7,ASB,ASB',ASB"), wobei das Audiogerät (AG1 - AG4) eingerichtet ist, die empfangenen Sprachbefehle (ASB1 - ASB7,ASB,ASB',ASB") zu analysieren, in entsprechende Bedienkommandos (BK1 - BK12, BK) zur Ansteuerung von Geräten (G1 - G4) und/oder Programmen, z.B. HVAC- oder Feldgeräte, in einem Gebäude umzuwandeln und an diese weiterzuleiten,
wobei der Anonymisierungsdienst (AD1 - AD4) als ein dem Audiogerät (AG1 - AG4) vorgeschalteter Proxy agiert, der dazu eingerichtet ist, einen empfangenen Sprachbefehl (SB1-SB7, ASB1-ASB7, ASB, ASB', ASB") für das Audiogerät (AG1 - AG4) in anonymisierter Form bereitzustellen bzw. weiterzuleiten,
wobei die Anonymisierung derart erfolgt, dass eine Rückverfolgbarkeit zwischen dem Benutzer (P1 - P6), d.h. dem Sender der Sprachbefehle (SB1 - SB7) und dem Anonymisierungsdienst (AD1 - AD4) gegeben ist, aber nicht zwischen dem Benutzer (P1 - P6), d.h. dem Sender der Sprachbefehle (SB1 - SB7) und dem Audiogerät,
wobei basierend auf der Analyse der empfangenen Sprachbefehle das Audiogerät ein Feedback (FB) generiert, welches vom Anonymisierungsdienst (AD1 - AD4) dem jeweiligen dedizierten Benutzer (P1 - P6), d.h. dem Sender der Sprachbefehle (SB1 - SB7) zugeordnet wird,
wobei der Anonymisierungsdienst (AD1 - AD4) durch Auswertung von Metainformationen bildenden Merkmalen aus den Sprachbefehlen (SB1-SB7), unabhängig vom Audiogerät (AG1 - AG4) und unabhängig von einem zur Spracherkennung eingerichteten, softwarebasierten Sprachassistent für eine dedizierte Zuordnung des Feedbacks (FB) zum jeweiligen Benutzer (P1 - P6), d.h. dem Sender der Sprachbefehle (SB1 - SB7) sorgt.

4. System nach Anspruch 3, wobei der Anonymisierungsdienst (AD1 - AD4) auf einem entsprechend ausgestatteten mobilen Kommunikationsendgerät (MG) des Benutzers (P1 - P6), d.h. dem Sender der Sprachbefehle (SB1-SB7) realisiert ist.

5. System nach Anspruch 3 oder 4, wobei der Anonymisierungsdienst (AD1 - AD4) im Audiogerät (AG1 - AG4) integriert ist.

6. System nach einem der Ansprüche 3 bis 5, wobei der Anonymisierungsdienst (AD1 - AD4) als vertrauenswürdige Netzwerkkomponente (Proxy) in einem Gebäudekommunikationsnetzwerk realisiert ist, und wobei das Audiogerät (AG1 - AG4) eine weitere vertrauenswürdige Netzwerkkomponente des Gebäudekommunikationsnetzwerkes ist.

7. Computerlesbares Speichermedium, das Anweisungen speichert, die wenn sie von einem Computer ausgeführt werden, den Computer veranlassen, ein Verfahren zum Bereitstellen eines sprachbasierten Dienstes, insbesondere für die Ansteuerung von Geräten oder zur Ansteuerung von Programmen in einem Gebäude, durchzuführen, wobei das Verfahren umfasst:
Bereitstellen eines Anonymisierungsdienstes (AD1 - AD4), der empfangene Sprachbefehle (SB1-SB7) eines Benutzers (P1 - P6) so umwandelt, dass die Identität des Benutzers (P1 - P6), d.h. des Senders der Sprachbefehle (SB1 - SB7) anonymisiert wird, wobei der Anonymisierungsdienst (AD1 - AD4) die anonymisierten Sprachbefehle (ASB1-ASB7, ASB, ASB', ASB") an einen zur Spracherkennung eingerichteten, softwarebasierten Sprachassistent ausgibt; und
Bereitstellen des Sprachassistenten zum Empfangen der anonymisierten Sprachbefehle (ASB1-ASB7, ASB, ASB', ASB"), wobei der Sprachassistent die empfangenen anonymisierten Sprachbefehle (ASB1-ASB7, ASB, ASB', ASB") analysiert, in entsprechende Bedienkommandos (BK1 - BK12, BK) zur Ansteuerung von Geräten und/oder zur Ansteuerung von Programmen in einem Gebäude umwandelt und an diese weiterleitet,
wobei der Anonymisierungsdienst (AD1 - AD4) als ein dem Audiogerät (AG1 - AG4) vorgeschalteter Proxy agiert, der einen empfangenen Sprachbefehl (SB1-SB7, ASB1-ASB7, ASB, ASB', ASB") für das Audiogerät (AG1 - AG4) in anonymisierter Form bereitstellt bzw. weiterleitet,
wobei die Anonymisierung derart erfolgt, dass eine Rückverfolgbarkeit zwischen dem Benutzer (P1 - P6), d.h. dem Sender der Sprachbefehle (SB1-SB7) und dem Anonymisierungsdienst (AD1 - AD4) gegeben ist, aber nicht zwischen dem Benutzer (P1 - P6), d.h. dem Sender der Sprachbefehle (SB1-SB7) und dem Audiogerät,
wobei basierend auf der Analyse der empfangenen Sprachbefehle das Audiogerät ein Feedback (FB) generiert, welches vom Anonymisierungsdienst (AD1 - AD4) dem dedizierten Benutzer (P1 - P6), d.h. dem Sender der Sprachbefehle (SB1-SB7) zugeordnet wird,
wobei der Anonymisierungsdienst (AD1 - AD4) durch Auswertung von Metainformationen bildenden Merkmalen aus den Sprachbefehlen (SB1-SB7), unabhängig vom Audiogerät (AG1 - AG4) und unabhängig von dem Sprachassistent für eine dedizierte Zuordnung des Feedbacks (FB) zum jeweiligen Benutzer (P1 - P6), d.h. dem Sender der Sprachbefehle (SB1-SB7) sorgt.

8. Computerprogrammprodukt, das auf einem Computer ausführbare Instruktionen enthält, die wenn sie von dem Computer ausgeführt werden, den Computer veranlassen, ein Verfahren zum Bereitstellen eines sprachbasierten Dienstes, insbesondere für die Ansteuerung von Geräten oder zur Ansteuerung von Programmen in einem Gebäude, durchzuführen, das Verfahren umfasst:
Bereitstellen eines Anonymisierungsdienstes (AD1 - AD4), der empfangene Sprachbefehle (SB1-SB7) eines Benutzers (P1 - P6) so umwandelt, dass die Identität des Benutzers (P1 - P6), d.h. des Senders der Sprachbefehle (SB1-SB7) anonymisiert wird, wobei der Anonymisierungsdienst (AD1 - AD4) die anonymisierten Sprachbefehle (ASB1-ASB7, ASB, ASB', ASB") an einen zur Spracherkennung eingerichteten, softwarebasierten Sprachassistent ausgibt; und
Bereitstellen des Sprachassistenten zum Empfangen der anonymisierten Sprachbefehle (ASB1-ASB7, ASB, ASB', ASB"), wobei der Sprachassistent die empfangenen anonymisierten Sprachbefehle (ASB1-ASB7, ASB, ASB', ASB") analysiert, in entsprechende Bedienkommandos (BK1 - BK12, BK) zur Ansteuerung von Geräten und/oder zur Ansteuerung von Programmen in einem Gebäude umwandelt und an diese weiterleitet,
wobei der Anonymisierungsdienst (AD1 - AD4) als ein dem Audiogerät (AG1 - AG4) vorgeschalteter Proxy agiert, der einen empfangenen Sprachbefehl (SB1-SB7, ASB1-ASB7, ASB, ASB', ASB") für das Audiogerät (AG1 - AG4) in anonymisierter Form bereitstellt bzw. weiterleitet,
wobei die Anonymisierung derart erfolgt, dass eine Rückverfolgbarkeit zwischen dem Benutzer (P1 - P6), d.h. dem Sender der Sprachbefehle (SB1-SB7) und dem Anonymisierungsdienst (AD1 - AD4) gegeben ist, aber nicht zwischen dem Benutzer (P1 - P6), d.h. dem Sender der Sprachbefehle (SB1-SB7) und dem Audiogerät,
wobei basierend auf der Analyse der empfangenen Sprachbefehle das Audiogerät ein Feedback (FB) generiert, welches vom Anonymisierungsdienst (AD1 - AD4) dem jeweiligen dedizierten Benutzer (P1 - P6), d.h. dem Sender der Sprachbefehle (SB1-SB7) zugeordnet wird,
wobei der Anonymisierungsdienst (AD1 - AD4) durch Auswertung von Metainformationen bildenden Merkmalen aus den Sprachbefehlen (SB1-SB7), unabhängig vom Audiogerät (AG1 - AG4) und unabhängig von dem Sprachassistent für eine dedizierte Zuordnung des Feedbacks (FB) zum jeweiligen Benutzer (P1 - P6), d.h. dem Sender der Sprachbefehle (SB1-SB7) sorgt.

## Claims

1. Method for providing a speech-based service, in particular for the control of building infrastructure technology, the method comprising:
receiving speech instructions (SB1-SB7, ASB1-ASB7, ASB, ASB', ASB") by means of an audio device (AG1-AG4), wherein the audio device (AG1-AG4) is configured to analyse the received speech instructions (SB1-SB7, ASB1-ASB7, ASB, ASB', ASB"), to convert them into corresponding operating commands (BK1-BK12, BK) for the control of devices (G1-G4) and/or programs, e.g. HVAC or field devices, in a building and to pass them on to corresponding room control elements (RBE) or directly to the respective building infrastructure technology;
wherein, before an evaluation of the speech instructions (SB1-SB7, ASB1-ASB7, ASB, ASB', ASB"), the identity of the user (P1-P6), i.e. of the sender of the speech instructions (SB1-SB7), is anonymised by a separate and trustworthy anonymisation service (AD1-AD4),
wherein the anonymisation service (AD1-AD4) acts as a proxy, which is connected upstream of the audio device (AG1-AG4) and which provides and/or passes on a received speech instruction (SB1-SB7, ASB1-ASB7, ASB, ASB', ASB") for the audio device (AG1-AG4) in an anonymised form,
wherein the anonymisation takes place such that retraceability exists between the user (P1-P6), i.e. the sender of the speech instructions (SB1-SB7), and the anonymisation service (AD1-AD4), but not between the user (P1-P6), i.e. the sender of the speech instructions (SB1-SB7), and the audio device,
wherein, on the basis of the analysis of the received speech instructions (SB1-SB7), the audio device (AG1-AG4) generates a feedback (FB) which is associated by the anonymisation service (AD1-AD4) with the respective dedicated user (P1-P6), i.e. the sender of the speech instructions (SB1-SB7),
wherein the anonymisation service (AD1-AD4), by evaluating metainformation-forming features from the speech instructions (SB1-SB7), independently of the audio device (AG1-AG4) and independently of a software-based speech assistant configured for speech recognition, provides for a dedicated association of the feedback (FB) with the respective user (P1-P6), i.e. the sender of the speech instructions (SB1-SB7).

2. Method according to claim 1, wherein the anonymisation takes place by means of a randomised speech alienation.

3. System for providing a speech-based service, in particular for the control of room control elements (RBE) in buildings, the system comprising:
a trustworthy anonymisation service (AD1-AD4) which is configured to receive speech instructions (SB1-SB7) of a user (P1-P6) and to convert them so that the identity of the user (P1-P6), i.e. the sender of the speech instructions (SB1-SB7), is anonymised, wherein the anonymisation service (AD1-AD4) is further configured to provide the anonymised speech instructions (ASB1-ASB7, ASB, ASB', ASB") for an audio device (AG1-AG4), in particular a non-trustworthy audio device;
an audio device (AG1-AG4), in particular a non-trustworthy audio device, for receiving the anonymised speech instructions (ASB1-ASB7, ASB, ASB', ASB"), wherein the audio device (AG1-AG4) is configured to analyse the received speech instructions (ASB1-ASB7, ASB, ASB', ASB"), to convert them into corresponding operating commands (BK1-BK12, BK) for the control of devices (G1-G4) and/or programs, e.g. HVAC or field devices, in a building and to pass them on to these,
wherein the anonymisation service (AD1-AD4) acts as a proxy, which is connected upstream of the audio device (AG1-AG4) and which is configured to provide and/or pass on a received speech instruction (SB1-SB7, ASB1-ASB7, ASB, ASB', ASB") for the audio device (AG1-AG4) in an anonymised form,
wherein the anonymisation takes place such that retraceability exists between the user (P1-P6), i.e. the sender of the speech instructions (SB1-SB7), and the anonymisation service (AD1-AD4), but not between the user (P1-P6), i.e. the sender of the speech instructions (SB1-SB7), and the audio device,
wherein on the basis of the analysis of the received speech instructions, the audio device generates a feedback (FB) which is associated by the anonymisation service (AD1-AD4) with the respective dedicated user (P1-P6), i.e. the sender of the speech instructions (SB1-SB7),
wherein the anonymisation service (AD1-AD4), by evaluating metainformation-forming features from the speech instructions (SB1-SB7), independently of the audio device (AG1-AG4) and independently of a software-based speech assistant configured for speech recognition, provides for a dedicated association of the feedback (FB) with the respective user (P1-P6), i.e. the sender of the speech instructions (SB1-SB7).

4. System according to claim 3, wherein the anonymisation service (AD1-AD4) is realised on a correspondingly equipped mobile communication terminal (MG) of the user (P1-P6), i.e. the sender of the speech instructions (SB1-SB7).

5. System according to claim 3 or 4, wherein the anonymisation service (AD1-AD4) is integrated into the audio device (AG1-AG4).

6. System according to one of the claims 3 to 5, wherein the anonymisation service (AD1-AD4) is realised as a trustworthy network component (proxy) in a building communication network, and wherein the audio device (AG1-AG4) is a further trustworthy network component of the building communication network.

7. Computer-readable storage medium which stores instructions which, when they are executed by a computer, cause the computer to carry out a method for providing a speech-based service, in particular for the control of devices or for the control of programs in a building, wherein the method comprises:
providing an anonymisation service (AD1-AD4) which converts received speech instructions (SB1-SB7) of a user (P1-P6) so that the identity of the user (P1-P6), i.e. the sender of the speech instructions (SB1-SB7), is anonymised, wherein the anonymisation service (AD1-AD4) outputs the anonymised speech instructions (ASB1-ASB7, ASB, ASB', ASB") to a software-based speech assistant configured for speech recognition; and
providing the speech assistant for receiving the anonymised speech instructions (ASB1-ASB7, ASB, ASB', ASB"), wherein the speech assistant analyses the received anonymised speech instructions (ASB1-ASB7, ASB, ASB', ASB"), converts them into corresponding operating commands (BK1-BK12, BK) for the control of devices and/or for the control of programs in a building and passes them on to these,
wherein the anonymisation service (AD1-AD4) acts as a proxy, which is connected upstream of the audio device (AG1-AG4) and which provides and/or passes on a received speech instruction (SB1-SB7, ASB1-ASB7, ASB, ASB', ASB") for the audio device (AG1-AG4) in an anonymised form,
wherein the anonymisation takes place such that retraceability exists between the user (P1-P6), i.e. the sender of the speech instructions (SB1-SB7), and the anonymisation service (AD1-AD4), but not between the user (P1-P6), i.e. the sender of the speech instructions (SB1-SB7), and the audio device,
wherein on the basis of the analysis of the received speech instructions, the audio device generates a feedback (FB) which is associated by the anonymisation service (AD1-AD4) with the dedicated user (P1-P6), i.e. the sender of the speech instructions (SB1-SB7),
wherein the anonymisation service (AD1-AD4), by evaluation of metainformation-forming features from the speech instructions (SB1-SB7), independently of the audio device (AG1-AG4) and independently of the speech assistant, provides for a dedicated association of the feedback (FB) with the respective user (P1-P6), i.e. the sender of the speech instructions (SB1-SB7).

8. Computer program product which contains instructions that are executable on a computer which, when they are executed by the computer, cause the computer to carry out a method for providing a speech-based service, in particular for the control of devices or for the control of programs in a building, the method comprising:
providing an anonymisation service (AD1-AD4) which converts received speech instructions (SB1-SB7) of a user (P1-P6) so that the identity of the user (P1-P6), i.e. the sender of the speech instructions (SB1-SB7), is anonymised, wherein the anonymisation service (AD1-AD4) outputs the anonymised speech instructions (ASB1-ASB7, ASB, ASB', ASB") to a software-based speech assistant configured for speech recognition; and
providing the speech assistant for receiving the anonymised speech instructions (ASB1-ASB7, ASB, ASB', ASB"), wherein the speech assistant analyses the received anonymised speech instructions (ASB1-ASB7, ASB, ASB', ASB"), converts them into corresponding operating commands (BK1-BK12, BK) for the control of devices and/or for the control of programs in a building and passes them on to these,
wherein the anonymisation service (AD1-AD4) acts as a proxy, which is connected upstream of the audio device (AG1-AG4) and which provides and/or passes on a received speech instruction (SB1-SB7, ASB1-ASB7, ASB, ASB', ASB") for the audio device (AG1-AG4) in an anonymised form,
wherein the anonymisation takes place such that retraceability exists between the user (P1-P6), i.e. the sender of the speech instructions (SB1-SB7), and the anonymisation service (AD1-AD4), but not between the user (P1-P6), i.e. the sender of the speech instructions (SB1-SB7), and the audio device,
wherein on the basis of the analysis of the received speech instructions, the audio device generates a feedback (FB) which is associated by the anonymisation service (AD1-AD4) with the respective dedicated user (P1-P6), i.e. the sender of the speech instructions (SB1-SB7),
wherein the anonymisation service (AD1-AD4), by evaluation of metainformation-forming features from the speech instructions (SB1-SB7), independently of the audio device (AG1-AG4) and independently of the speech assistant, provides for a dedicated association of the feedback (FB) with the respective user (P1-P6), i.e. the sender of the speech instructions (SB1-SB7).

## Revendications

1. Procédé pour la fourniture d'un service vocal, en particulier pour la commande d'une technologie d'infrastructure de bâtiment, le procédé comportant :
la réception de commandes vocales (SB1 - SB7, ASB1 - ASB7, ASB, ASB', ASB") par le biais d'un appareil audio (AG1 - AG4), dans lequel l'appareil audio (AG1 - AG4) est conçu pour analyser les commandes vocales (SB1 - SB7, ASB1 - ASB7, ASB, ASB', ASB") reçues, pour les convertir en commandes de fonctionnement (BK1 - BK12, BK) correspondantes destinées à commander des appareils (G1 - G4) et/ou des programmes, par exemple des appareils de CVC ou de terrain, dans un bâtiment et pour les transférer à des éléments de commande de salle (RBE) correspondants ou directement à la technologie d'infrastructure de bâtiment respective ;
dans lequel, avant une évaluation des commandes vocales (SB1 - SB7, ASB1 - ASB7, ASB, ASB', ASB"), l'identité de l'utilisateur (P1 - P6), c'est-à-dire de l'émetteur des commandes vocales (SB1 - SB7), est anonymisée par le biais d'un service d'anonymisation (AD1 - AD4) distinct et digne de confiance,
dans lequel le service d'anonymisation (AD1 - AD4) agit en tant que proxy placé en amont de l'appareil audio (AG1 - AG4) et met à disposition ou transmet à l'appareil audio (AG1 - AG4), sous forme anonymisée, une commande vocale (SB1 - SB7, ASB1 - ASB7, ASB, ASB', ASB") reçue,
dans lequel l'anonymisation s'effectue de telle sorte qu'une traçabilité soit donnée entre l'utilisateur (P1 - P6), c'est-à-dire l'émetteur des commandes vocales (SB1 - SB7), et le service d'anonymisation (AD1 - AD4), mais pas entre l'utilisateur (P1 - P6), c'est-à-dire l'émetteur des commandes vocales (SB1 - SB7), et l'appareil audio,
dans lequel, sur la base de l'analyse des commandes vocales (SB1 - SB7) reçues, l'appareil audio (AG1 - AG4) génère un retour (FB), lequel est associé par le service d'anonymisation (AD1 - AD4) à l'utilisateur dédié correspondant (P1 - P6), c'est-à-dire à l'émetteur des commandes vocales (SB1 - SB7),
dans lequel le service d'anonymisation (AD1 - AD4) garantit une association dédiée du retour (FB) à l'utilisateur correspondant (P1 - P6), c'est-à-dire à l'émetteur des commandes vocales (SB1 - SB7), par évaluation de caractéristiques constituant des méta-informations issues des commandes vocales (SB1 - SB7), indépendamment de l'appareil audio (AG1 - AG4) et indépendamment d'un assistant vocal logiciel, conçu pour la reconnaissance vocale.

2. Procédé selon la revendication 1, dans lequel l'anonymisation s'effectue par le biais d'une altération aléatoire de la voix.

3. Système pour la fourniture d'un service vocal, en particulier pour la commande d'éléments de commande de salle (RBE) dans des bâtiments, le système comportant :
un service d'anonymisation (AD1 - AD4) digne de confiance qui est conçu pour recevoir des commandes vocales (SB1 - SB7) d'un utilisateur (P1 - P6) et pour les convertir de sorte que l'identité de l'utilisateur (P1 - P6), c'est-à-dire de l'émetteur des commandes vocales (SB1 - SB7), soit anonymisée, dans lequel le service d'anonymisation (AD1 - AD4) est en outre conçu pour fournir les commandes vocales anonymisées (ASB1 - ASB7, ASB, ASB', ASB") à un appareil audio (AG1 - AG4), en particulier à un appareil audio non digne de confiance ;
un appareil audio (AG1 - AG4), en particulier un appareil audio non digne de confiance, pour la réception des commandes vocales anonymisées (ASB1 - ASB7, ASB, ASB', ASB"), dans lequel l'appareil audio (AG1 - AG4) est conçu pour analyser les commandes vocales (ASB1 - ASB7, ASB, ASB', ASB") reçues, pour les convertir en commandes de fonctionnement (BK1 - BK12, BK) correspondantes destinées à commander des appareils (G1 - G4) et/ou des programmes, par exemple des appareils de CVC ou de terrain, dans un bâtiment et pour les transférer à ceux-ci, dans lequel le service d'anonymisation (AD1 - AD4) agit en tant que proxy placé en amont de l'appareil audio (AG1 - AG4), le proxy étant configuré pour mettre à disposition ou transmettre à l'appareil audio (AG1 - AG4), sous forme anonymisée, une commande vocale (SB1 - SB7, ASB1 - ASB7, ASB, ASB', ASB") reçue,
dans lequel l'anonymisation s'effectue de telle sorte qu'une traçabilité soit donnée entre l'utilisateur (P1 - P6), c'est-à-dire l'émetteur des commandes vocales (SB1 - SB7), et le service d'anonymisation (AD1 - AD4), mais pas entre l'utilisateur (P1 - P6), c'est-à-dire l'émetteur des commandes vocales (SB1 - SB7), et l'appareil audio,
dans lequel, sur la base de l'analyse des commandes vocales reçues, l'appareil audio génère un retour (FB), lequel est associé par le service d'anonymisation (AD1 - AD4) à l'utilisateur dédié correspondant (P1 - P6), c'est-à-dire à l'émetteur des commandes vocales (SB1 - SB7),
dans lequel le service d'anonymisation (AD1 - AD4) garantit une association dédiée du retour (FB) à l'utilisateur correspondant (P1 - P6), c'est-à-dire à l'émetteur des commandes vocales (SB1 - SB7), par évaluation de caractéristiques constituant des méta-informations issues des commandes vocales (SB1 - SB7), indépendamment de l'appareil audio (AG1 - AG4) et indépendamment d'un assistant vocal logiciel, conçu pour la reconnaissance vocale.

4. Système selon la revendication 3, dans lequel le service d'anonymisation (AD1 - AD4) est mis en œuvre sur un terminal de communication mobile (MG) de l'utilisateur (P1 - P6), c'est-à-dire de l'émetteur des commandes vocales (SB1 - SB7), convenablement équipé.

5. Système selon la revendication 3 ou 4, dans lequel le service d'anonymisation (AD1 - AD4) est intégré dans l'appareil audio (AG1 - AG4).

6. Système selon l'une des revendications 3 à 5, dans lequel le service d'anonymisation (AD1 - AD4) est mis en œuvre en tant que composant de réseau (proxy) digne de confiance dans un réseau de communication de bâtiment, et dans lequel l'appareil audio (AG1 - AG4) est un autre composant de réseau digne de confiance du réseau de communication de bâtiment.

7. Support de stockage lisible par ordinateur stockant des instructions qui, lorsqu'elles sont exécutées par un ordinateur, amènent celui-ci à mettre en œuvre un procédé pour la fourniture d'un service vocal, en particulier pour commander des appareils ou pour commander des programmes dans un bâtiment, dans lequel le procédé comporte :
la fourniture d'un service d'anonymisation (AD1 - AD4) qui convertit des commandes vocales (SB1 - SB7) reçues d'un utilisateur (P1 - P6) de sorte que l'identité de l'utilisateur (P1 - P6), c'est-à-dire de l'émetteur des commandes vocales (SB1 - SB7), soit anonymisée, dans lequel le service d'anonymisation (AD1 - AD4) émet en sortie les commandes vocales anonymisées (ASB1 - ASB7, ASB, ASB', ASB") à destination d'un assistant vocal logiciel conçu pour la reconnaissance vocale ; et
la fourniture de l'assistant vocal pour la réception des commandes vocales anonymisées (ASB1 - ASB7, ASB, ASB', ASB"), dans lequel l'assistant vocal analyse les commandes vocales anonymisées (ASB1 - ASB7, ASB, ASB', ASB") reçues, les convertit en commandes de fonctionnement (BK1 - BK12, BK) correspondantes destinées à commander des appareils et/ou destinées à commander des programmes dans un bâtiment et les transfère à ceux-ci,
dans lequel le service d'anonymisation (AD1 - AD4) agit en tant que proxy placé en amont de l'appareil audio (AG1 - AG4) et met à disposition ou transmet à l'appareil audio (AG1 - AG4), sous forme anonymisée, une commande vocale (SB1 - SB7, ASB1 - ASB7, ASB, ASB', ASB") reçue,
dans lequel l'anonymisation s'effectue de telle sorte qu'une traçabilité soit donnée entre l'utilisateur (P1 - P6), c'est-à-dire l'émetteur des commandes vocales (SB1 - SB7), et le service d'anonymisation (AD1 - AD4), mais pas entre l'utilisateur (P1 - P6), c'est-à-dire l'émetteur des commandes vocales (SB1 - SB7), et l'appareil audio,
dans lequel, sur la base de l'analyse des commandes vocales reçues, l'appareil audio génère un retour (FB), lequel est associé par le service d'anonymisation (AD1 - AD4) à l'utilisateur dédié (P1 - P6), c'est-à-dire à l'émetteur des commandes vocales (SB1 - SB7),
dans lequel le service d'anonymisation (AD1 - AD4) garantit une association dédiée du retour (FB) à l'utilisateur respectif (P1 - P6), c'est-à-dire à l'émetteur des commandes vocales (SB1 - SB7), par évaluation de caractéristiques constituant des méta-informations issues des commandes vocales (SB1 - SB7), indépendamment de l'appareil audio (AG1 - AG4) et indépendamment de l'assistant vocal.

8. Produit de programme informatique qui contient des instructions exécutables sur un ordinateur, lesquelles, lorsqu'elles sont exécutées par celui-ci, amènent l'ordinateur à mettre en œuvre un procédé pour la fourniture d'un service vocal, en particulier pour commander des appareils ou pour commander des programmes dans un bâtiment, dans lequel le procédé comporte :
la fourniture d'un service d'anonymisation (AD1 - AD4) qui convertit des commandes vocales (SB1 - SB7) reçues d'un utilisateur (P1 - P6) de sorte que l'identité de l'utilisateur (P1 - P6), c'est-à-dire de l'émetteur des commandes vocales (SB1 - SB7), soit anonymisée, dans lequel le service d'anonymisation (AD1 - AD4) émet en sortie les commandes vocales anonymisées (ASB1 - ASB7, ASB, ASB', ASB") à destination d'un assistant vocal logiciel conçu pour la reconnaissance vocale ; et
la fourniture de l'assistant vocal pour la réception des commandes vocales anonymisées (ASB1 - ASB7, ASB, ASB', ASB"), dans lequel l'assistant vocal analyse les commandes vocales anonymisées (ASB1 - ASB7, ASB, ASB', ASB") reçues, les convertit en commandes de fonctionnement (BK1 - BK12, BK) correspondantes destinées à commander des appareils et/ou destinées à commander des programmes dans un bâtiment et les transfère à ceux-ci,
dans lequel le service d'anonymisation (AD1 - AD4) agit en tant que proxy placé en amont de l'appareil audio (AG1 - AG4) et met à disposition ou transmet à l'appareil audio (AG1 - AG4), sous forme anonymisée, une commande vocale (SB1 - SB7, ASB1 - ASB7, ASB, ASB', ASB") reçue,
dans lequel l'anonymisation s'effectue de telle sorte qu'une traçabilité soit donnée entre l'utilisateur (P1 - P6), c'est-à-dire l'émetteur des commandes vocales (SB1 - SB7), et le service d'anonymisation (AD1 - AD4), mais pas entre l'utilisateur (P1 - P6), c'est-à-dire l'émetteur des commandes vocales (SB1 - SB7), et l'appareil audio,
dans lequel, sur la base de l'analyse des commandes vocales reçues, l'appareil audio génère un retour (FB), lequel est associé par le service d'anonymisation (AD1 - AD4) à l'utilisateur dédié respectif (P1 - P6), c'est-à-dire à l'émetteur des commandes vocales (SB1 - SB7),
dans lequel le service d'anonymisation (AD1 - AD4) garantit une association dédiée du retour (FB) à l'utilisateur respectif (P1 - P6), c'est-à-dire à l'émetteur des commandes vocales (SB1 - SB7), par évaluation de caractéristiques constituant des méta-informations issues des commandes vocales (SB1 - SB7), indépendamment de l'appareil audio (AG1 - AG4) et indépendamment de l'assistant vocal.
